# EUROPÄISCHE PATENTANMELDUNG

(11) **EP 0 835 916 A2**
(43) Veröffentlichungstag der Anmeldung: **15.04.1998**
(21) Anmeldenummer: 97117403.2
(22) Anmeldetag: 08.10.1997
(51) Int. Cl.: C09J 7/02

(54) **Haftklebeartikel aus einem Obermaterial, einer Haftklebeschicht und einem siliconfreien Trägermaterial**

(30) Priorität: 10.10.1996 DE 19641830
(71) Anmelder: STEINBEIS GESSNER GmbH, D-83052 Bruckmühl (DE)
(72) Erfinder: Dehler, Klaus, Dipl.-Ing., 83059 Kolbermohr (DE); Heininger, Hans-Ulrich, Dr., 83299 Aschau (DE); Gunia, Paul-Gerhard, Dr., 83727 Schliersee (DE)
(74) Vertreter: Kindler, Matthias, Dr. Dipl.-Chem.

(57) **Zusammenfassung**

Die Erfindung betrifft einen Haftklebeartikel aus einem Obermaterial, einer Haftklebeschicht und einem Trägermaterial. Das Trägermaterial umfaßt ein Basismaterial, z.B. Papier oder eine Folie aus Polyethylen, Polypropylen oder Polyester, und eine Trennbeschichtung, die siliconfrei ist, ein oder mehrere Polymere oder Copolymere aus den Monomeren Acrylat, Methacrylat, Acrylnitril, Butadien, Styrol, Vinylchlorid, Vinylidenchlorid, Vinylether, Isopren, Chloropren, Vinylpyrrolidon, ungesättigter Fluorkohlenwasserstoff, ungesättigte Carbonsäure, Ethylenvinylacetat, Vinylacetat, und/oder Diisocyanat in Kombination mit Diol enthält und gegenüber der Haftklebeschicht einen Trennwert von ≤ 1 N/25 mm (nach FINAT 10) besitzt.

## Beschreibung

Die Erfindung betrifft einen Haftklebeartikel aus einem Obermaterial, einer Haftklebeschicht und einem Trägermaterial.

Haftklebeartikel aus einem Obermaterial, einer Haftklebeschicht und einem Trägermaterial sind bereits bekannt. Haftklebeartikel zeichnen sich dadurch aus, daß man das Obermaterial samt Haftklebeschicht leicht von dem Trägermaterial lösen kann, ohne Rückstände auf dem Trägermaterial zu hinterlassen, um es dann an ein beliebiges Substrat zu kleben. Haftklebeartikel finden Anwendung z.B. als Selbstklebeetiketten, Klebstofftransferbeschichtungen, ein- oder doppelseitig beschichtete Selbstklebebänder, selbstklebende Gummibeschichtungen, Haftnotizzettel, Montage- und Schutzfolien, Abdeckpapiere, Wund- und Wirkstoffpflaster, Beschriftungsschablonenen, Slipeinlagen, selbstklebende Textile, Kuverts und selbstklebende Formulare. Das Obermaterial des Haftklebeartikels besteht in der Regel aus einem Papier, einem Karton, einer Kunststoff- oder Metallfolie oder einem Textil. Auf einer Seite des Obermaterials ist eine Haftklebeschicht aufgetragen, wobei es sich um einen Schmelzklebstoff, einen Lösungs- oder Dispersionsklebstoff handeln kann. Das Basismaterial des Trägermaterials besteht üblicherweise aus einem Papier, kann aber auch aus einer Folie aus Polyethylen, Polypropylen oder Polyester bestehen. Die gute Trennwirkung des Trägermaterials von der Haftklebeschicht wird dadurch bewirkt, daß es mit einer anti-adhäsiven Schicht versehen wird. Eine solche anti-adhäsive Schicht besteht in der Regel aus Silicon.

Die hohe Trennwirkung von Silicon gegen alle klebenden Materialien ist zwar vorteilhaft, jedoch stören schon geringste Spuren von Silicon aus diesen Trägermaterialien bei manchen Anwendungen. So ist das Rückführen des Siliconbeschichteten Papiers in den Altpapierprozeß nicht möglich, da sich das Silicon beim Aufschlagen des Papiers zum Teil von der Faser trennt und sich auf dem Sieb der Papiermaschine ablagert. Hier verursacht es Benetzungsfehlstellen und somit Löcher in der neuen Papierbahn. Weiterhin können Spuren von Silicon z. B. beim Autolackieren von den verwendeten Trägermaterialien über die Finger des Anwenders auf die zu lackierenden Flächen übertragen werden und hierdurch Fehler in der Lackierung verursachen.

Dieser Erfindung liegt daher die Aufgabe zugrunde, Haftklebeartikel aus einem Obermaterial, einer Haftklebeschicht und einem Trägermaterial zur Verfügung zu stellen, wobei die Trennschicht des Trägermaterials siliconfrei ist, jedoch eine vergleichbar hohe Trennwirkung wie die bereits bekannten Silicon-haltigen Trennschichten aufweist.

Diese Aufgabe wird erfindungsgemäß gelöst durch einen Haftklebeartikel, umfassend ein Obermaterial, eine Haftklebeschicht und ein Trägermaterial mit einem Basismaterial und einer Trennbeschichtung, der dadurch gekennzeichnet ist, daß die Trennbeschichtung des Trägermaterials
a) siliconfrei ist,
b) ein oder mehrere (Co-)Polymere (A) aus den Monomeren Acrylat, Methacrylat, Acrylnitril, Butadien, Styrol, Vinylchlorid, Vinylidenchlorid, Vinylether, Isopren, Chloropren, Vinylpyrrolidon, ungesättigter Fluorkohlenwasserstoff, ungesättigte Carbonsäure, Ethylenvinylacetat, Vinylacetat, und/oder Diisocyanat in Kombination mit Diol enthält und
c) gegenüber der Haftklebeschicht einen Trennwert von ≤ 1 N/25 mm (nach FINAT 10) besitzt.

Diese Trennwerte lassen sich durch Auswahl bzw. geeignete Kombination obiger Monomere zu (Co-)Polymeren erzielen.

Die (Co-)Polymere (A) haben vorzugsweise ein Molekulargewicht von > 10000 g/mol, insbesondere bevorzugt > 50000 g/mol (viskosimetrische Bestimmung).

In einer bevorzugten Ausführungsform enthält die Trennbeschichtung des Trägermaterials Acrylnitril-Butadien als (Co-)Polymer (A).

Bei einem Trennwert ≤ 1 N/25 mm ist die Trennwirkung ausreichend hoch, um ein nahezu ruckfreies, leichtes Abziehen des Obermaterials von dem Trägermaterial zu ermöglichen. Ein nahezu ruckfreies, leichtes Abziehen ist z.B. beim Abziehen von Etiketten von dem Trägermaterial wichtig, da sonst Dehnungsstreifen im Etikett entstehen, die das Aussehen erheblich beeinträchtigen können.

Zur Verbesserung der Altersstabilität können die (Co-)Polymere (A) vernetzt werden. Dies geschieht entweder thermisch bei Verwendung selbstvernetzender Polymere oder mit Hilfe von Vernetzern, wie z.B. mehrwertigen Metallkomplexen, Melaminformaldehydharzen, Harnstofformaldehydharzen, Epoxyden, Carbodiimiden und Aziridinen.

Vorzugsweise enthält die Trennbeschichtung des Trägermaterials weiterhin ein oder mehrere Wachse (B). Eine wachshaltige Polymerbeschichtung besitzt eine gegenüber der reinen Polymerbeschichtung erhöhte Trennwirkung. Dies ist überraschend, da eine Trennbeschichtung aus dem Wachs (B) allein keine hohe Trennwirkung zeigt. Wachs (B) und Polymer (A) wirken hierbei synergistisch in Bezug auf die Trennwirkung.

Die erfindungsgemäß verwendete Trennbeschichtung enthält vorzugsweise zu 1 bis 80 Gew.% Wachse (B), insbesondere bevorzugt 30 bis 50 Gew.-%, bezogen auf das Gesamtgewicht der Trennbeschichtung.

Die Wachse (B) enthalten vorzugsweise Polyethylen, oxidiertes Polyethylen, Polypropylen, Paraffin, Ester-, Ether-, Säurewachse oder Verbindungen bzw. Mischungen hieraus.

Die Wachse (B) haben in der Regel ein Molekulargewicht von <4000 g/mol, wobei Polyethylen- und Polypropylenwachse auch ein Molekulargeweicht bis zu 40000 g/mol haben können (viskosimetrische Bestimmung).

Bei Verwendung wachshaltiger Polymerbeschichtungen ist es ausreichend, daß die wachshaltige Trennbeschichtung solche (Co-)Polymere (A) enthält, die für sich, ohne Zugabe der Wachse (B), einen Trennwert gegenüber dem Haftkleber von ≤ 2 N/25mm aufweisen.

Vorteilhafterweise besitzt die Trennbeschichtung aus den (Co-)Polymeren (A) bzw. aus der Kombination der (Co-)Polymere (A) und Wachse (B) gegenüber der Haftklebeschicht einen Trennwert von 0,1 bis 0,7 N/25 mm (nach FINAT 10). Insbesondere bevorzugt sind Trennwerte von 0,1 bis 0,5 N/25 mm (nach FINAT 10).

Zur Rohkosteneinsparung ist es möglich, der Trennbeschichtung neben den (Co-)Polymeren (A) und Wachsen (B) noch Füllstoffe wie z.B. Kaolin, Calciumcarbonat oder Talkum bis zu 50 Gew.%, bezogen auf das Gesamtgewicht der Trennbeschichtung, zuzumischen.

Die Trennbeschichtung ist weiterhin vorzugsweise wasserempfindlich, dadurch gekennzeichnet, daß sie mit Wasser einen Kontaktwinkel kleiner 60° ausbildet. Der Kontaktwinkel wird bestimmt, indem man einen Tropfen Wasser mittels einer Kanüle auf die Trennbeschichtung aufbringt und dann den Winkel zwischen der horizontalen Trennbeschichtung und der Tangente am Tropfenrand bestimmt.

In einer bevorzugten Ausführungsform hat die Trennbeschichtung des Trägermaterials eine Flächenmasse von 1 bis 10 g/m², besonders bevorzugt von 2 bis 5 g/m².

Das Basismaterial des Trägermaterials besteht üblicherweise aus einem Papier oder einer Folie aus Polyethylen, Polypropylen oder Polyester.

Besteht das Basismaterial aus Papier, so hat dieses vorzugsweise eine Flächenmasse von 40 bis 160 g/m² und kann vorzugsweise ein- oder beidseitig geglättet sein. Durch die Glättung verdichtet sich die Oberfläche und wird hierdurch weniger saugfähig. Dies hat zur Folge, daß die Trennschicht störungsfrei die Papieroberfläche bedecken kann und nicht in das Papier eindringt. Weiterhin ist es, wenn überhaupt, nur sehr wenig naßfest, damit es sich im Altpapierprozeß rückstandsfrei auflösen läßt.

Bei zu saugfähigem oder offenporigem Papier wird gegebenenfalls eine wasserlösliche bzw. reemulgierbare Zwischenbeschichtung aufgetragen, um das Eindringen der Trennschicht in das Papier zu verhindern. Trennschichten, die zu sehr in das Papier eindringen, ergeben keinen vollständig geschlossenen Film und zeichnen sich daher durch eine zu geringe und sehr stark schwankende Trennwirkung aus. Die Zwischenbeschichtung ist entweder wasserlöslich oder leicht in Wasser quellbar, damit sie die Papierfasern im nassen Zustand nicht zu stark bindet und sich somit bei der Wiederverwertung die Faserauflösung nicht zu sehr verzögert. Als Beispiel für ein Material einer solchen Zwischenbeschichtung sei Stärke genannt.

Besteht das Basismaterial des Trägermaterials aus einer Folie aus Polyethylen, Polypropylen oder Polyester, so ist in der Regel vor der Beschichtung eine Coronabehandlung vorteilhaft, um eine gute Benetzung und Haftung der Trennbeschichtung auf der Folie zu erzielen. In einigen Fällen kann auch der Einsatz eines Haftvermittlers zwischen Folie und Trennbeschichtung vorteilhaft sein.

Die der Trennbeschichtung gegenüberliegende Seite des Basismaterials kann mit einer weiteren Beschichtung versehen werden, deren Eigenschaft sich nach den jeweiligen Anforderungen richtet. Diese wirkt in der Regel dimensionsstabilisierend. Ein Beispiel für eine solche Beschichtung ist Streichfarbe zur Verbesserung der Bedruckbarkeit.

Die Haftklebeschicht des Haftklebartikels kann einen Schmelzklebstoff, einen Lösungs- oder Dispersionsklebstoff enthalten.

Die erfindungsgemäß verwendbaren Schmelzkleber umfassen thermoplastische Rückgratpolymere und gegebenenfalls ein Klebharz, einen Weichmacher, ein viskositätserniedrigendes Mittel, einen Stabilisator und/oder einen Füllstoff.

Geeignete thermoplastische Rückgratpolymere sind z.B. natürlicher Kautschuk; synthetischer Kautschuk wie SBS, SIS, SEBS (Styrol/Ethylen/Butadien/Styrol), SEPS (Styrol/Ethylen/Propylen/Styrol) (Triblockcopolymere) und S-B, S-I, S-EP (Diblockcopolymere); Polyolefine wie ataktisches Polypropylen, Ethylen-Propylen-Butadien-Copolymer; Polyacrylate wie Polybutylacrylsäureester, Poly(2-ethylhexylacrylsäureester), Polymethacrylsäureester und deren Copolymere mit z.B. Acrylsäure, Methacrylsäure, Vinylacetat, Maleinsäureanhydrid, Diacetonacrylamid oder Acrylnitril; Polyvinylderivate wie Ethylen-Vinylacetat-Copolymer, (1-Vinyl-2-pyrrolidon)-Vinylacetat-Copolymer, Vinylacetat-Vinyllaurat-Copolymer; Polyamide wie Diethylentriaminpolyamid; Copolyamide; Polyester; Copolyester; Copolyetherester; Polyurethane und Silicone. Diese Rückgratpolymere können als Copolymerisate oder als Gemische untereinander vollständig vernetzt oder durch UV- oder Elektronenstrahlung nachvernetzbar eingesetzt werden.

Geeignete Klebharze sind z.B. aliphatische, alicyclische und aromatische Kohlenwasserstoffe; Polyterpene; Kolophoniumester wie Kolophonium-Glycerin-Ester, hydrierter Kolophonium-Pentaerythrit-Ester und polymerisierte Kolophonium-Diethylenglykol-Ester sowie polymerisiertes Kolophonium.

Geeignete Weichmacher sind z.B. Phthalate wie Diethylphthalat, Dioctylphthalat, Diisodecylphthalat; Phosphate wie Tributylphosphat, Triphenylphosphat; Dioctyladipat; Dioctylsebacat und Dibutylmaleat.

Geeignete viskositätserniedrigende Additive sind z.B. aliphatische, alicyclische und aromatische Kohlenwasserstoffe; flüssiges Polybuten; flüssiges Polystyrol; Xylol-Formaldehyd-Harze und Cumaron-Inden-Harze.

Geeignete Stabilisatoren sind z.B. Tetrakis[methylen-3-(3',5'-di-tert.butyl-4'-hydroxyphenyl)propionat]methan; 1,3,5-Trimethyl-2,4,6-tris(3,5-di-tert.butyl-4-hydroxy-benzyl)benzol; 4,4'-Thiobis-(6-tert.butyl-m-kresol); Zinkdibutyldithiocarbamat; Dibutylthioharnstoff; Octylphenylsalicylat; 2-Hydroxy-4-(2-hydroxy-3-methacryloxy) propiobenzophenon und Octa-decyl-3-(3',5'-di-tert.butyl-4'-hydroxyphenyl)propionat.

Geeignete Füllstoffe sind z.B. mineralische Stoffe wie Kaolin, Calciumcarbonat oder Talk.

Das Obermaterial des Haftklebeartikels kann aus Papier, Karton, einer Kunststoff- oder Metallfolie, einem Kunststoffschaum oder aus Textil bestehen. Die Kunststoffolie und der Kunststoffschaum können z.B. aus Polyvinylchlorid, Polystyrol, Polyolefinen, Polyestern, Polyurethanen oder Cellulosederivaten hergestellt sein.

Der erfindungsgemäße Haftklebeartikel ermöglicht es, das Obermaterial samt Haftklebeschicht von dem Trägermaterial derart abzulösen, daß
a) dieses nahezu ruckfrei und leicht geschieht und somit keine Dehnungen im Obermaterial auftreten,
b) das Trägermaterial im Falle des aus Papier bestehenden Basismaterials dem Altpapierprozeß ohne Beeinträchtigung des Ablaufs zugeführt werden kann, da es zu keinen Ablagerungen auf dem Sieb der Papiermaschine kommt, und
c) eine Verwendung der Haftklebeartikel ohne Gefahr der Beeinträchtigung zu behandelnder Oberflächen (z.B. beim Lackieren), wie im Falle der Verwendung siliconhaltiger Trägermaterialien, ermöglicht wird.

Zur Herstellung der erfindungsgemäßen Haftklebeartikel wird üblicherweise zunächst das Obermaterial des Haftklebeartikels (ein Papier, Karton, eine Kunststoff- oder Metallfolie, einem Kunststoffschaum oder ein Textil) mit dem Klebstoff beschichtet. Bei Verwendung von Dispersions- oder Lösungsklebstoffen wird hierbei das Obermaterials vollständig beschichtet und der Klebstoff anschließend getrocknet. Bei Verwendung von Schmelzklebern werden diese zunächst vor der Beschichtung aufgeschmolzen und dann entweder mittels einer Düse vollflächig auf das Obermaterial aufgetragen oder im Siebdruckverfahren punktförmig aufgebracht. Bei der Verwendung von Schmelzklebern entfällt ein Trocknen und der Kleber ist nach dem Abkühlen funktionsfähig. Bevor nun das klebstoffbeschichtete Obermaterial aufgerollt wird, wird die Klebstoffschicht mit dem Trägermaterial abgedeckt. Dazu läuft zu dem klebstoffbeschichteten Obermaterial die Trägermaterialbahn zu und beide werden durch leichten Druck mittels Kaschierwalzen miteinander verklebt. Anschließend wird der gesamte Verbund aufgerollt.

Die Erfindung beinhaltet auch ein Trägermaterial mit einem Basismaterial und einer Trennbeschichtung, dadurch gekennzeichnet, daß die Trennbeschichtung des Trägermaterials
a) siliconfrei ist und
b) ein oder mehrere (Co-)Polymere (A) aus den Monomeren Acrylat, Methacrylat, Acrylnitril, Butadien, Styrol, Vinylchlorid, Vinylidenchlorid, Vinylether, Isopren, Chloropren, Vinylpyrrolidon, ungesättigter Fluorkohlenwasserstoff, ungesättigte Carbonsäure, Ethylenvinylacetat, Vinylacetat, und/oder Diisocyanat in Kombination mit Diol enthält.

Die bevorzugten Ausführungsformen des Trägermaterials entsprechen den oben aufgeführten, bevorzugten Ausführungsformen des Trägermaterials in dem erfindungsgemäßen Haftklebeartikel.

Obiges Trägermaterial kann auch bei der Herstellung von Kunstleder Verwendung finden. Hierbei wird z.B. eine PVC- oder Polyurethanpaste auf das Trägermaterial extrudiert. Nach dem Erkalten kann dann die Kunstlederbahn, die nicht selbstklebend ist, vom Trägermaterial getrennt und weiterverarbeitet werden.

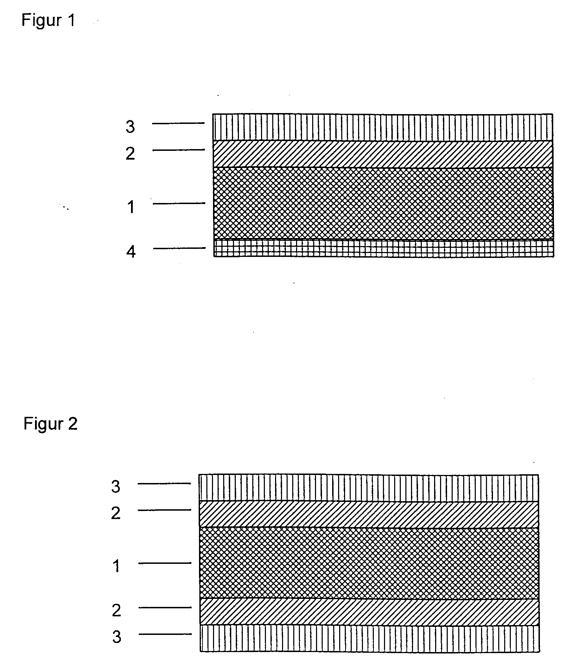

Die Figuren 1 und 2 stellen den schematischen Aufbau von verschiedenen Variationen des erfindungsgemäßen Trägermaterials dar.

Fig. 1: Aufbau eines einseitig mit einer Trennbeschichtung versehenen, erfindungsgemäßen Trägermaterials, bei dem nur auf einer Seite des Trägermaterials eine Trennbeschichtung aufgebracht ist.

Auf dem Basismaterial des Trägermaterials (1) befindet sich eine siliconfreie Trennschicht (3), die über einer wasserlöslichen bzw. reemulgierbaren Zwischenbeschichtung (2) aufgetragen ist. Die gegenüberliegende Papierseite weist eine Beschichtung (4) auf, deren Eigenschaft sich nach den jeweiligen Anforderungen richtet.

Fig. 2: Aufbau eines beidseitig mit einer Trennbeschichtung versehenen, erfindungsgemäßen Trägermaterials.

Auf dem Basismaterial (1) befindet sich sowohl auf der Oberals auch auf der Unterseite eine siliconfreie Trennbeschichtung (3), die über einer wasserlöslichen bzw. reemulgierbaren Zwischenbeschichtung (2) aufgetragen ist.

Nachfolgend wird diese Erfindung durch Beispiele näher erläutert.

### Beispiel 1

Einseitig glattes Kraftpapier (70 g/m²) wurde mit 3 g/m² einer Acrylnitrilbutadiendispersion (A) mit ca. 35 Gew.-% Acrylnitrilanteil beschichtet und getrocknet. Die Dispersion besitzt einen pH-Wert von 7.5, eine Viskosität nach Brookfield von 30 mPas, eine Oberflächenspannung von 31 mN/m und eine Glasübergangstemperatur von < 0°C. Mit dieser Beschichtung wurden Trennwerte gegenüber einem Synthesekautschukkleber von 0,8 N/25 mm und gegenüber einem Acrylatkleber von 0,9 N/25 mm erreicht (Trennwerte nach FINAT 10).

### Beispiel 2

Siliconrohpapier (70 g/m²) wurde mit 3 g/m² einer Acrylnitrilbutadiendispersion (A) wie in Beispiel 1 beschichtet und getrocknet. Mit dieser Beschichtung wurden Trennwerte gegenüber einem Synthesekautschukkleber von 0,8 N/25 mm und gegenüber einem Acrylatkleber von 0,9 N/25 mm erreicht (Trennwerte nach FINAT 10).

### Beispiel 3

Siliconrohpapier (70 g/m²) wurde mit 3 g/m² einer Mischung aus einer Acrylnitrilbutadiendispersion (A) wie in Beispiel 1 und einer Polyethylenwachsdispersion (B) (Mischungsverhältnis (A):(B) = 7:3) beschichtet und getrocknet. Mit dieser Beschichtung wurden Trennwerte gegenüber Synthesekautschuk- und Acrylatkleber von 0,2 N/25mm erreicht (Trennwerte nach FINAT 10).

### Beispiel 4

Siliconrohpapier (70 g/m²) wurde mit einer Mischung aus einer selbstvernetzenden Acrylatdispersion (A) mit einem pH-Wert von 5.2, einer Viskosität nach Brookfield von 17 mPas, einer Oberflächenspannung 42mN/m und einer Glasübergangstemperatur von 27°C und einer modifizierten Polyethylendispersion (B) beschichtet (Mischungsverhältnis (A):(B) = 5:5) und getrocknet. Der Trennwert dieser Beschichtung gegenüber Synthesekautschukkleber betrug 0,7 N/25mm (Trennwerte nach FINAT 10).

### Vergleichsbeispiel 1

Der Trennwert von einem handelsüblichen siliconisierten Trennpapier mit einer Flächenmasse von 70 g/m² betrug gegenüber Synthesekautschukkleber 0,6 N/25mm und gegenüber Acrylatkleber 0,5 N/25mm (Trennwerte nach FINAT 10).

Die oben genannten Beispiele zeigen, daß die erfindungsgemäßen Trägermaterialien vergleichbar hohe Trennwirkungen wie die handelsüblichen siliconisierten Trennpapiere aufweisen. Weiterhin zeigen die Beispiele 2 und 3, daß durch die Zugabe von Wachsen die Trennwirkung gegenüber der reinen Polymerbeschichtung erhöht werden kann.

Die Papiere aus den Beispielen 1 bis 4 lassen sich im Altpapierprozeß problemlos aufschlagen. Im Gegensatz zum siliconisierten Papier aus Vergleichsbeispiel 1 bleiben bei dem erfindungsgemäßen Papier auf den Fasern keine Stoffe zurück, die den Faserverbund der später gebildeten Papierbahn stören. Störungen durch auf dem Papiersieb abgelagertes Silicon sind mit den erfindungsgemäßen, wiederverwertbaren siliconfreien Trägermaterialien ebenso ausgeschlossen wie die Übertragung von Silicon bei der Anwendung der Haftklebeartikel auf Flächen, auf denen es Störungen verursachen kann, wie z.B. auf zu lackierenden Flächen.

## Patentansprüche

1. Haftklebeartikel, umfassend ein Obermaterial, eine Haftklebeschicht und ein Trägermaterial mit einem Basismaterial und einer Trennbeschichtung, dadurch gekennzeichnet, daß
die Trennbeschichtung des Trägermaterials
a) siliconfrei ist,
b) ein oder mehrere (Co-)Polymere (A) aus den Monomeren Acrylat, Methacrylat, Acrylnitril, Butadien, Styrol, Vinylchlorid, Vinylidenchlorid, Vinylether, Isopren, Chloropren, Vinylpyrrolidon, ungesättigter Fluorkohlenwasserstoff, ungesättigte Carbonsäure, Ethylenvinylacetat, Vinylacetat, und/oder Diisocyanat in Kombination mit Diol enthält und
c) gegenüber der Haftklebeschicht einen Trennwert von ≤ 1 N/25 mm (nach FINAT 10) besitzt.

2. Haftklebeartikel gemäß Anspruch 1, dadurch gekennzeichnet, daß
die Trennbeschichtung des Trägermaterials als (Co-)Polymer (A) Acrylnitril-Butadien enthält.

3. Haftklebeartikel gemäß Anspruch 1 oder 2, dadurch gekennzeichnet, daß
die Trennbeschichtung des Trägermaterials zusätzlich ein oder mehrere Wachse (B) enthält.

4. Haftklebeartikel gemäß Anspruch 3, dadurch gekennzeichnet, daß
die Wachse (B) in einer Menge von 1 bis 80 Gew.% enthalten sind, in Bezug auf das Gesamtgewicht der Trennbeschichtung.

5. Haftklebeartikel gemäß Anspruch 3 oder 4, dadurch gekennzeichnet, daß
die Wachse (B) aus Polyethylen, oxidiertem Polyethylen, Polypropylen, Paraffin, Ester-, Ether-, Säurewachsen oder aus Verbindungen bzw. Mischungen hieraus bestehen.

6. Haftklebeartikel gemäß einem oder mehrerer der Ansprüche 3 bis 5, dadurch gekennzeichnet, daß
die (Co-)Polymere (A) einen Trennwert gegenüber dem Haftkleber von ≤ 2 N/25 mm (nach FINAT 10) aufweisen.

7. Haftklebeartikel gemäß einem oder mehrerer der Ansprüche, dadurch gekennzeichnet, daß
die Trennbeschichtung des Trägermaterials gegenüber der Haftklebeschicht einen Trennwert von 0,1 bis 0,7 N/25 mm (nach FINAT 10) besitzt.

8. Haftklebeartikel gemäß einem oder mehrerer der vorhergehenden Ansprüche, dadurch gekennzeichnet, daß
die Trennbeschichtung des Trägermaterials einen Kontaktwinkel kleiner 60° aufweist.

9. Haftklebeartikel gemäß einem oder mehrerer der vorhergehenden Ansprüche, dadurch gekennzeichnet, daß
das Basismaterial des Trägermaterials ein Papier ist.

10. Haftklebeartikel gemäß Anspruch 9, dadurch gekennzeichnet, daß
das Basispapier ein- oder beidseitig geglättet ist.

11. Haftklebeartikel gemäß einem oder mehrerer der vorhergehenden Ansprüche, dadurch gekennzeichnet, daß
zwischen Trennbeschichtung und Basismaterial eine Zwischenbeschichtung vorliegt.

12. Haftklebeartikel gemäß Anspruch 11, dadurch gekennzeichnet, daß
die Zwischenbeschichtung wasserlöslich oder leicht in Wasser quellbar ist.

13. Haftklebeartikel gemäß einem oder mehrerer der vorhergehenden Ansprüche, dadurch gekennzeichnet, daß
die Haftklebeschicht aus einem Schmelzklebstoff, Lösungs- oder Dispersionsklebstoff besteht.

14. Haftklebeartikel gemäß einem oder mehrerer der vorhergehenden Ansprüche, dadurch gekennzeichnet, daß
das Obermaterial des Haftklebeartikels ein Papier, Karton, eine Kunststoff- oder Metallfolie, ein Kunststoffschaum oder ein Textil ist.

15. Trägermaterial, umfassend eine Trennbeschichtung und ein Basismaterial, dadurch gekennzeichnet, daß
die Trennbeschichtung des Trägermaterials
a) siliconfrei ist,
b) ein oder mehrere (Co-)Polymere (A) aus den Monomeren Acrylat, Methacrylat, Acrylnitril, Butadien, Styrol, Vinylchlorid, Vinylidenchlorid, Vinylether, Isopren, Chloropren, Vinylpyrrolidon, ungesättigter Fluorkohlenwasserstoff, ungesättigte Carbonsäure, Ethylenvinylacetat, Vinylacetat, und/oder Diisocyanat in Kombination mit Diol enthält.

16. Trägermaterial gemäß Anspruch 15, dadurch gekennzeichnet, daß
die Trennbeschichtung des Trägermaterials als (Co-) Polymer (A) Acrylnitril-Butadien enthält.

17. Trägermaterial gemäß Anspruch 15 oder 16, dadurch gekennzeichnet, daß
die Trennbeschichtung des Trägermaterials zusätzlich ein oder mehrere Wachse (B) enthält.

18. Trägermaterial gemäß Anspruch 17, dadurch gekennzeichnet, daß
die Wachse (B) in einer Menge von 1 bis 80 Gew.% enthalten sind, in Bezug auf das Gesamtgewicht der Trennbeschichtung.

19. Trägermaterial gemäß Anspruch 17 oder 18, dadurch gekennzeichnet, daß
die Wachse (B) aus Polyethylen, oxidiertem Polyethylen, Polypropylen, Paraffin, Ester-, Ether-, Säurewachsen oder aus Verbindungen bzw. Mischungen hieraus bestehen.
